# EUROPEAN PATENT SPECIFICATION

(11) **EP 3 165 046 B1**
(45) Date of publication and mention of the grant of the patent: **04.11.2020**
(21) Application number: 14734480.8
(22) Date of filing: 01.07.2014
(51) Int. Cl.: H04W 76/28, H04W 52/02

(54) **IMPROVED DRX CONFIGURATION**
VERBESSERTE DRX-KONFIGURATION
CONFIGURATION DE RÉCEPTION DISCONTINUE (DRX) AMÉLIORÉE

(43) Date of publication of application: 10.05.2017
(73) Proprietor: Telefonaktiebolaget LM Ericsson (publ), 164 83 Stockholm (SE)
(72) Inventor: LANGEREIS, Alexander, 193 40 Stigtuna (SE); KANESALINGAM, Prabaharan, Ottawa, Ontario K2M 2R9 (CA)
(74) Representative: Zacco Sweden AB
(86) International application number: PCT/EP2014/063974
(87) International publication number: WO 2016/000765

(56) References cited:
- US-A1- 2005 066 034
- US-A1- 2008 101 268
- US-A1- 2013 045 770

## Description

### Technical Field

The invention relates to improvements in the configuration of discontinuous reception, DRX, in a mobile telephone network. In particular, the invention relates to methods and apparatus for providing improved DRX configuration in the case where a base station has certain subframes reserved for specific services.

### Background

### Discontinuous Reception (DRX)

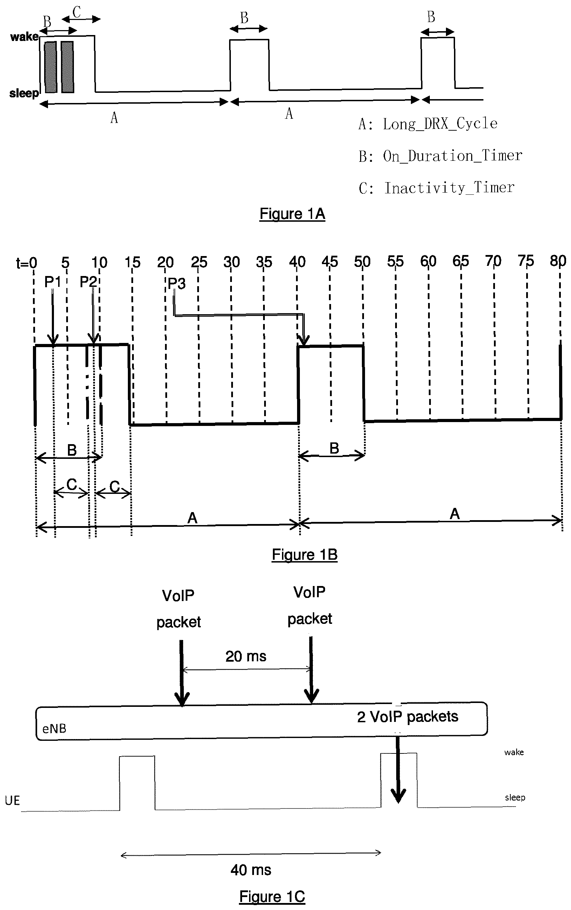

In mobile communications networks, discontinuous reception (DRX) is used to reduce battery consumption in the user equipment (UE). Figure 1A shows an example of a DRX configuration. The UE alternates between two modes, "wake", in which the UE can receive data, and "sleep" in which the UE cannot receive data as the receiver circuit is powered down in order to conserve battery life (the terms "awake" and "asleep" are use to describe being in each state). The wake-sleep cycle is defined by various parameters, as specified in the standard (3GPP TS 36.331 V12.1.0), the most important of which are shown in Figure 1A. "Long_DRX_Cycle" (A) defines the length of the DRX cycle, i.e. the time between each switch from "sleep" to "wake". "On_Duration_Timer" (B) defines the minimum period for which each UE will be awake in each cycle, and "Inactivity_Timer" (C) defines the minimum period that the UE will be awake after receiving a packet or receiving grant for transmitting a packet on the physical uplink shared channel (PUSCH).

As an example, take the situation shown in Figure 1B where Long_DRX_Cycle (A) = 40ms, On_Duration_Timer (B) = 10ms, and Inactivity_Timer (C) = 5ms. Defining the start of the first cycle as t=0ms, the UE is initially expected to remain awake until t=10ms, and to enter the sleep state at this time. If a packet (P1) is received a t=3ms, the inactivity timer would run out at t=3ms+5ms=8ms. Since this is before the expiry of the on duration timer, the UE would remain awake until t=10ms. If a packet (P2) is then received at t=9ms, the inactivity timer would run out at t=14ms, so the UE remains in the wake state until t=14ms (or longer if further packets are received in that time). If a packet P3 is then available to be sent from the base station (more specifically, an eNodeB) to the UE at t=22ms, it is queued up at the base station until the next time the UE is awake. At t=40ms, the on duration timer resets, and the UE re-enters the wake state if it was asleep. Any packets which were queued up by the base station are then sent to the UE.

The DRX configuration is negotiated between the base station and the UE at registration, and at establishment of any bearer (and for some bearer modifications), or at another occasion where a Radio Resource Control (RRC) Connected Reconfiguration is performed. The DRX configuration will be chosen to give a good balance between quality of service and battery life for the UE. For example, a typical DRX configuration for an idle UE would involve a much longer Long_DRX_Cycle than a DRX configuration for a UE which is engaged in a Voice over IP (VoIP) call. The On_Duration_Timer would be similar in each case, so the idle UE would require much less power for the receiver circuits.

### Voice over IP (VoIP)

VoIP services function by splitting the audio of a voice call into a number of packets, each of which contains a short segment of the overall audio (typically on the order of 20ms). These are sent from the speaker's UE to the listener's UE, where they are reassembled. In order to ensure that the listener hears a continuous stream of audio (e.g. with no gaps, slowed down sections, or popping), there is some delay between the receiving of the packets at the listener's UE and playback, which is used to smooth out any variation in the rate at which audio is received. The total "mouth-to-ear" delay (i.e. the delay between audio being recorded at the speaker's UE, and played back at the listener's UE) is one of the main factors in determining speech quality. In order to provide slack time for smoothing out the audio at the listener's UE, the transmission time of packets through the network should be as low as possible.

In Long Term Evolution (LTE) networks, all packets are delivered using the IP protocol. This means that all voice calls on LTE networks use VoIP for LTE (VoLTE). VoLTE defines "delay budgets", which specify the maximum delay that can be introduced between nodes of the network when transmitting VoLTE packets in order to maintain a good quality of service. The delay budget between the eNodeB and the UE is normally 80ms. In order to balance battery consumption at the UE with this delay budget, a typical Long_DRX_Cycle for a UE involved in a VoLTE session is 40ms. Since VoLTE packets are sent every 20ms, this means that two speech packets will normally be sent by the eNodeB in each wake period, as shown in Figure 1C. If a wake period is missed, then an additional delay of 40ms in introduced, which makes it more difficult to transmit the packets within the delay budget (since other factors other than the time the packet is held at the base station while the UE is asleep will add to the total delay).

### Evolved Multimedia Broadcast Multicast Service (eMBMS)

Evolved Multimedia Broadcast Multicast Service (eMBMS) is used in LTE networks to offer broadcast or multicast services. The service reserves specific subframes at the eNodeB for multimedia broadcast (each subframe lasts 1ms). Depending on the amount of multicast content schedule to be transmitted, up to 6 of the 10 subframes in each radio frame can be configured for eMBMS. These subframes form the "Multi Broadcast Single Frequency Network" (MBSFN), and are reserved for eMBMS transmissions (i.e. cannot be used for unicast traffic such as VoLTE).

US 2013/045770 A1 describes an active reception period of a power saving pattern (discontinuous reception - DRX) masked to a measurement period of a serving or neighbor cell interference mitigation pattern such that the masked active reception period repeatedly coincides with the measurement period.

US 2008/0101268 A1 describes a method of discontinuous reception (DRX) in a wireless transmit receive unit for enhancing DRX in wireless systems.

US 2005/066034 A1 describes a method, a transmitting and/or receiving unit, and a communications system for efficient, resource saving and energy saving transmission to data to a group of recipients on a point-to-multipoint service.

### Summary

According to independent claim 1, there is provided a method in communications network. Downlink transmissions to a user equipment, UE, are scheduled with reserved subframes for one or more specified services. An amount of overlap between wake periods of a default discontinuous reception, DRX, configuration for the UE and said reserved subframes is determined, and it is then determined that the amount of overlap exceeds a threshold. In response a configuration signal is sent to the UE, the configuration signal configuring the UE to use an extended DRX configuration having wake periods of greater duration than the wake periods of the default DRX configuration.

According to independent claim 7, there is provided an apparatus comprising a radio transceiver, a downlink scheduling processor, a DRX scheduling processor, and a DRX configuration processor. The radio transceiver is configured to communicate with a user equipment, UE. The downlink scheduling processor is configured to schedule downlink transmissions on the transceiver, including scheduling reserved subframes for one or more specified services. The DRX scheduling processor is configured to determine an amount of overlap between wake periods of a default DRX configuration for the UE and said reserved subframes, and determine that the amount of overlap exceeds a threshold. The DRX configuration processor is configured to, in response to the determination that the amount of overlap exceeds a threshold, cause the transceiver to send a configuration signal to the UE, the configuration signal configuring the UE to use an extended DRX configuration having wake periods of greater duration than the wake periods of the default DRX configuration.

According to independent claims 13 and 14, there is provided a computer program, comprising instructions which, when executed on at least one processor, cause the at least one processor to carry out the method according to the first aspect. The computer program may be carried on any one of an electronic signal, optical signal, radio signal, or a non-transitory computer readable storage medium.

### Brief Description of the Drawings

Figures 1 A, B and C illustrate discontinuous reception;
Figure 2 shows an overlap between MBSF subframes and DRX wake periods;
Figure 3 A and B are flowcharts of methods according to embodiments;
Figure 4 is a flowchart of a method according to a further embodiment; and
Figure 5 is a schematic diagram of a base station.

### Detailed Description

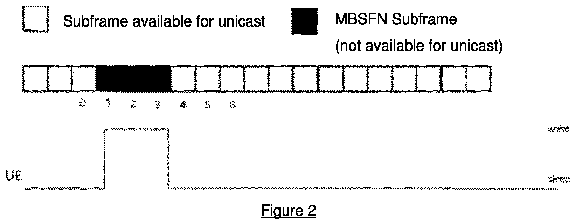

In situations where eMBMS co-exists with DRX, the available subframes for downlink transmission of unicast packets (e.g. VoLTE) are reduced by both eMBMS and DRX. Since both features reduce the possible subframes in which the unicast packets can be transmitted, a combination of the two features can result in very few or even zero subframes being available for downlink transmission during a DRX cycle. This problem would also occur for services other than eMBMS which restrict the types of packets which can be sent on certain reserved subframes. An example of this overlap is shown in Figure 2.

A solution is proposed below in order to overcome the above problem. The solution requires new functionality only in the base station (the term is used herein to include eNodeBs). No extra communication is required for other nodes of the network, aside from the UE, and the altered signalling sent to the UE can be handled by standard software in the UE.

A flowchart of the method is show in Figures 2A and B. The method is triggered when the base station has reserved subframes scheduled, and has UEs with DRX enabled scheduled. This could occur either when a UE initiates a session or otherwise triggers a new DRX configuration while the base station has reserved subframes scheduled

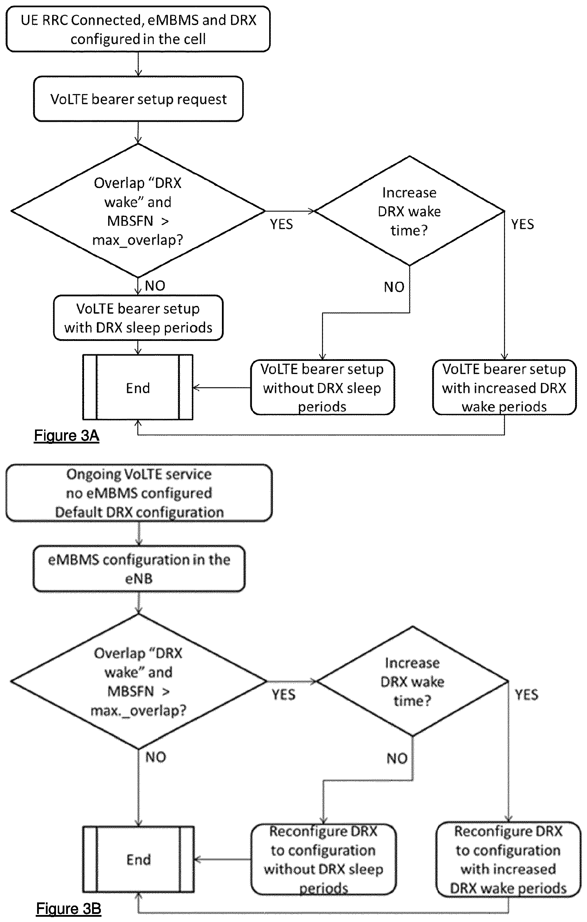

(Figure 3A) or when reserved subframes (e.g. for eMBMS) are first scheduled (Figure 3B). The base station determines an amount of overlap between scheduled reserved subframes and the DRX configuration of the UE. In the case where the method is triggered by the UE initiating a session or otherwise causing an adjustment in DRX configuration, the relevant DRX configuration is the default DRX configuration that would be scheduled for the UE. In the case where the method is triggered by the scheduling of reserved subframes, the relevant DRX configuration is the current DRX configuration of the UE (where the "default DRX configuration" is referred to, this can be taken to include the current DRX configuration in this case). If the overlap between the DRX wake times and the reserved subframes exceeds a threshold, then the base station sends an "extended" DRX configuration to the UE, with increased wake periods compared to the default DRX configuration. If the overlap does not exceed a threshold, then the base station sends the default DRX configuration, or does not send a new DRX configuration if the UE is already using the default DRX configuration.

Considering further how the method is triggered, in the case where the UE initiates a session or otherwise triggers a new DRX configuration, the method may be triggered for all such requests, or only for UEs using a subset of services. For example, the method may not be triggered if the UE initiates a session for a service which is allowed in the reserved subframes, and/or the method may only be triggered for certain services for which a relatively high quality of service is required (e.g. real time or near real time services). Similarly, when reserved subframes are first scheduled, the method may be triggered for all UEs, or only for UEs using a subset of services. This would allow the basestation to avoid having to perform the method for UEs which would only gain marginal benefit from the extended DRX configuration, and avoids causing higher than necessary drain on the battery of UEs which are running services which do not require a high quality of service.

Alternatively, the threshold for the overlap between the DRX wake times and the reserved subframes may depend on the service(s) in use by the UE. For example, a UE involved in a voice call may have a lower overlap threshold than a UE involved in a file transfer, and both may have a lower overlap threshold than a UE which is not currently involved in any sessions.

The overlap between the DRX wake times and the reserved subframes may be determined in a variety of ways. In one embodiment, the overlap may be determined by comparing the total overlap of DRX wake times and reserved subframes over many DRX cycles, e.g. over all frames for which the reserved subframe schedule has been determined. The resulting overlap may be expressed as a ratio. However, this method will not identify many problematic overlaps. For example, if the schedule is determined for the next 1000 DRX cycles, and 980 of those cycles have no overlap, but 20 consecutive cycles overlap entirely with reserved subframes, then this embodiment would only show a 2% overlap, which would likely be considered acceptable, even though there would be considerable disruption of service for the 20 cycles which overlap completely.

The threshold at which the overlap is determined to be unacceptable may be set so that it is exceeded when performance of the service running on the UE would be likely to be affected by the overlap.

In a further embodiment, an overlap may be determined for each DRX cycle for which subframe scheduling information is available, and the contribution of each cycle to the overall overlap may be weighted non-linearly, e.g. with cycles with a greater individual overlap contributing more to the overall overlap measurement than would be expected if the weighting were linear. As an example, if there was a DRX cycle with a 10% overlap and a DRX cycle with a 50% overlap, the DRX cycle with a 50% overlap may contribute more than 5 times the amount that the DRX cycle with a 10% overlap contributes to the overall overlap measurement.

In a further embodiment, an overlap may be determined for each DRX cycle, and these overlaps may be compared individually to a threshold.

In any of the above embodiments, the comparison may be weighted depending on where the reserved subframes overlap with the DRX wake period. For example, an overlap at the start of a DRX wake period may be weighted less heavily than an overlap at the end of a DRX wake period, as the overlap at the start is more likely to be naturally compensated for on a default configuration by the inactivity timer. As a further optional feature, reserved subframes that occur after the on duration timer expires may be considered at a reduced weight, e.g. depending on the time between the expiry of the on duration timer and the reserved subframe and the length of the inactivity timer.

If the base station determines that the overlap exceeds a threshold, then an "extended" DRX configuration will be provided to the UE. The extended DRX configuration will have longer wake times than that standard DRX configuration, either through increasing the On_Duration_Timer, the Inactivity_Timer, another suitable variable, or some combination of multiple variables. The wake time will be increased in order to ensure that there is an acceptable amount of time available for transmission of data to the UE in all or a majority of DRX cycles. The exact configuration used may depend on the level of overlap. For example, the extended DRX configuration may be such that where the overlap is between 30 and 75% for a DRX cycle, the extended configuration may set the Inactivity_Timer such that if a packet is received while the UE is awake, the overlap would decrease to below 30%, and where the overlap is about 75%, the extended configuration may additionally set the On_DurationTimer such that the overlap is reduced below 75%.

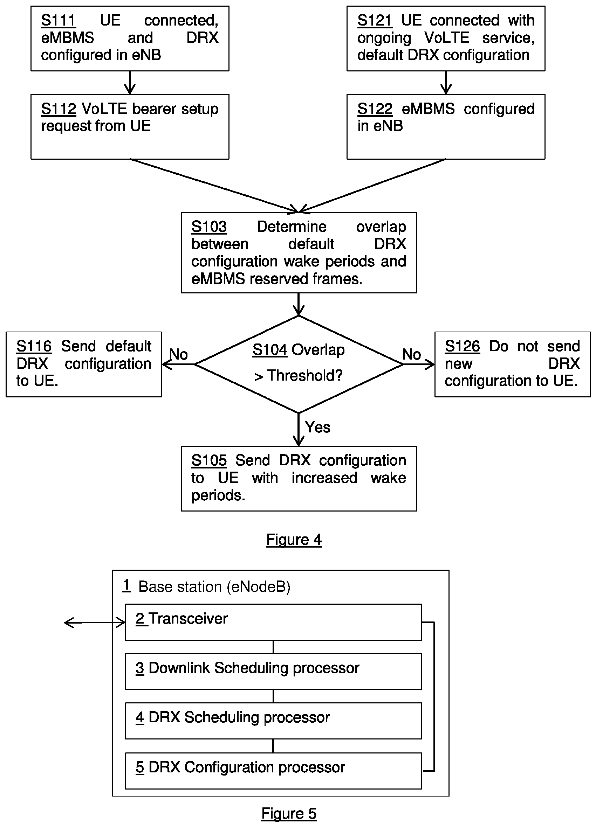

Figure 4 is a flowchart of the method described above, and Figure 5 is a schematic of a base station suitable for implementing the method. The I Z base station (1) comprises a radio transceiver (2), a downlink scheduling processor (3), a DRX scheduling processor (4) and a DRX configuration processor (5). The radio transceiver (2) is configured to communicate with the UE. The downlink scheduling processor (3) is configured to schedule downlink transmissions on the transceiver. The method may be triggered in one of two ways, shown as S111/S112 and S121/S122. In the first option, the downlink scheduling processor (3) has already scheduled reserved subframes (e.g. eMBMS) on the transceiver (S111), and a new bearer, e.g. a VoLTE bearer request is received from the UE (S121). In the second option, the UE is already connected with an ongoing session, e.g. VoLTE, using a default DRX configuration (S111), and the downlink scheduling processor (3) schedules reserved subframes (e.g. eMBMS) on the transceiver (S121).

Following the method being triggered, the DRX scheduling processor (4) determines an overlap between the reserved subframes and the wake periods of the default DRX configuration (i.e. the configuration that would normally be applied to the UE, or the configuration the UE is currently using if there is already an ongoing session) (S103). The DRX scheduling processor (4) then determines whether the overlap exceeds a threshold (S104). If the overlap exceeds the threshold, then the DRX configuration processor (5) causes the transceiver to send a configuration signal to the UE, the configuration signal configuring the UE to use an extended DRX configuration having wake periods of greater duration than the wake periods of the default DRX configuration (S105). If the overlap does not exceed the threshold, then if the UE is not currently on the default DRX configuration, the DRX configuration processor causes the transceiver to send a configuration signal to the UE, the configurations signal configuring the UE to use the default DRX configuration (S116). If the overlap does not exceed the threshold and the UE is currently on the DRX configuration, no configuration signal needs to be sent.

The method disclosed above may be implemented as a computer program, comprising instructions which, when executed on at least one processor, cause the at least one processor to carry out the method. The computer program may be carried on any one of an electronic signal, optical signal, radio signal, or a non-transitory computer readable storage medium

Those skilled in the art will be able to make modifications and alternatives in view of the disclosure which are contemplated as falling within the scope of the appended claims. For example, while the method is described herein as being performed at a base station the skilled person will appreciate that the method could be performed at another node with access to the DRX configuration of the UE, and the scheduling information for the base station.

Similarly, the method could be performed at nodes equivalent to the base station in other network architectures. Each feature disclosed or illustrated in the present specification may be incorporated in the invention, whether alone or in any appropriate combination with any other feature disclosed or illustrated herein.

## Claims

1. A method in a communications network, wherein downlink transmissions to a user equipment, UE, are scheduled with reserved subframes for one or more specified services, the method comprising:
determining (S103) an amount of overlap between wake periods of a default discontinuous reception, DRX, configuration for the UE and said reserved subframes;
determining (S104) that the amount of overlap exceeds a threshold **characterised in that** in response to said determining that the amount of overlap exceeds a threshold, sending (S105) a configuration signal to the UE, the configuration signal configuring the UE to use an extended DRX configuration having wake periods of greater duration than the wake periods of the default DRX configuration.

2. A method according to claim 1, wherein the method is performed in response to detecting establishment of a session involving the UE, wherein said session is optionally a voice over IP, VoIP, session or a voice over LTE, VoLTE, session.

3. A method according to claim 1, wherein the method is performed in response to scheduling of reserved subframes, and wherein the UE is configured with the default DRX configuration prior to the step of determining the amount of overlap.

4. A method according to any preceding claim, wherein the one or more specified services comprise multimedia broadcast multicast service, MBMS, and/or evolved MBMS, eMBMS.

5. A method according to any preceding claim, wherein said extended DRX configuration is configured to cause the UE to remain in the wake state permanently, or wherein said extended DRX configuration is configured to cause the UE to remain in the wake state for at least a predetermined period of time after the reserved subframes.

6. A method according to any preceding claim, wherein the method is performed in a base station or an evolved NodeB, eNodeB.

7. An apparatus (1) comprising:
a radio transceiver (2) configured to communicate with a user equipment, UE;
a downlink scheduling processor (3) configured to schedule downlink transmissions on the transceiver, including scheduling reserved subframes for one or more specified services;
**characterised by** a discontinuous reception, DRX, scheduling processor (4) configured to determine an amount of overlap between wake periods of a default DRX configuration for the UE and said reserved subframes, and determine that the amount of overlap exceeds a threshold;
and by a DRX configuration processor (5) configured to, in response to the determination that the amount of overlap exceeds a threshold, cause the transceiver to send a configuration signal to the UE, the configuration signal configuring the UE to use an extended DRX configuration having wake periods of greater duration than the wake periods of the default DRX configuration.

8. An apparatus according to claim 7, wherein the DRX scheduling processor is configured to perform the steps of determining in response to detecting establishment of a session involving the UE, wherein said session is optionally a voice over IP, VoIP, session or a voice over LTE, VoLTE, session.

9. An apparatus according to claim 7, wherein the DRX scheduling processor is configured to perform the steps of determining in response to scheduling of reserved subframes by the downlink scheduling processor.

10. An apparatus according to any of claims 7 to 9, wherein the one or more specified services comprise multimedia broadcast multicast service, MBMS, and/or evolved MBMS, eMBMS.

11. An apparatus according to any of claims 7 to 10, wherein the extended DRX configuration is configured to cause the UE to remain in the wake state permanently, or wherein the extended DRX configuration is configured to cause the UE to remain in the wake state for at least a predetermined period of time after the reserved subframes.

12. An apparatus according to any of claims 7 to 11, and configured to operate as a base station or an evolved NodeB, eNodeB.

13. A computer program, comprising instructions which, when executed on at least one processor, cause the at least one processor to carry out the method according to any one of claims 1 to 6.

14. A carrier containing the computer program of claim 13, wherein the carrier is one of an electronic signal, optical signal, radio signal, or a non-transitory computer readable storage medium.

## Patentansprüche

1. Verfahren in einem Kommunikationsnetz, wobei Downlink-Übertragungen an eine Benutzereinrichtung, UE, mit reservierten Unterrahmen für einen oder mehrere angegebene Dienste geplant werden, das Verfahren umfassend:
Bestimmen (S103) einer Menge an Überlappung zwischen Aktivierungszeiträumen einer Standardkonfiguration für einen diskontinuierlichen Empfang, DRX-Konfiguration, für die UE und den reservierten Unterrahmen;
Bestimmen (S104), dass die Menge an Überlappung einen Schwellenwert überschreitet, **gekennzeichnet durch,** als Reaktion auf das Bestimmen, dass die Menge an Überlappung einen Schwellenwert überschreitet, Senden (S105) eines Konfigurationssignals an die UE, wobei das Konfigurationssignal die UE konfiguriert, um eine erweiterte DRX-Konfiguration zu verwenden, die Aktivierungszeiträume von größerer Dauer als die Aktivierungszeiträume der Standard-DRX-Konfiguration aufweist.

2. Verfahren nach Anspruch 1, wobei das Verfahren als Reaktion auf ein Erkennen des Aufbaus einer Sitzung durchgeführt wird, an der die UE beteiligt ist, wobei die Sitzung optional eine Voice over IP-Sitzung, VoIP-Sitzung, oder eine Voice over LTE-Sitzung, VoLTE-Sitzung, ist.

3. Verfahren nach Anspruch 1, wobei das Verfahren als Reaktion auf ein Planen von reservierten Unterrahmen durchgeführt wird und wobei die UE vor dem Schritt des Bestimmens der Menge an Überlappung mit der Standard-DRX-Konfiguration konfiguriert wird.

4. Verfahren nach einem der vorhergehenden Ansprüche, wobei der eine oder die mehreren angegebenen Dienste Multimedia Broadcast Multicast Service, MBMS, und/oder evolved MBMS, eMBMS, umfassen.

5. Verfahren nach einem der vorhergehenden Ansprüche, wobei die erweiterte DRX-Konfiguration konfiguriert ist, um zu bewirken, dass die UE dauerhaft in dem Wachzustand bleibt, oder wobei die erweiterte DRX-Konfiguration konfiguriert ist, um zu bewirken, dass die UE für mindestens einen vorbestimmten Zeitraum nach den reservierten Unterrahmen in dem Wachzustand bleibt.

6. Verfahren nach einem der vorhergehenden Ansprüche, wobei das Verfahren in einer Basisstation oder einem evolved NodeB, eNodeB, durchgeführt wird.

7. Einrichtung (1), umfassend:
einen Funk-Sender-Empfänger (2), der konfiguriert ist, um mit einer Benutzereinrichtung, UE, zu kommunizieren;
einen Downlink-Planungsprozessor (3), der konfiguriert ist, um Downlink-Übertragungen auf dem Sender-Empfänger zu planen, einschließlich eines Planens von reservierten Unterrahmen für einen oder mehrere angegebene Dienste;
**gekennzeichnet durch** einen Planungsprozessor für diskontinuierlichen Empfang, DRX, (4), der konfiguriert ist, um eine Menge an Überlappung zwischen Aktivierungszeiträumen einer Standard-DRX-Konfiguration für die UE und den reservierten Unterrahmen zu bestimmen und zu bestimmen, dass die Menge an Überlappung einen Schwellenwert überschreitet;
und durch einen DRX-Konfigurationsprozessor (5), der konfiguriert ist, um als Reaktion auf die Bestimmung, dass die Menge an Überlappung einen Schwellenwert überschreitet, zu bewirken, dass der Sender-Empfänger ein Konfigurationssignal an die UE sendet, wobei das Konfigurationssignal die UE konfiguriert, um eine erweiterte DRX-Konfiguration zu verwenden, die Aktivierungszeiträume von größerer Dauer als die Aktivierungszeiträume der Standard-DRX-Konfiguration aufweist.

8. Einrichtung nach Anspruch 7, wobei der DRX-Planungsprozessor konfiguriert ist, um die Schritte des Bestimmens als Reaktion auf ein Erkennen des Aufbaus einer Sitzung, an der die UE beteiligt ist, durchzuführen, wobei die Sitzung optional eine Voice over IP-Sitzung, VoIP-Sitzung, oder eine Voice over LTE-Sitzung, VoLTE-Sitzung, ist.

9. Einrichtung nach Anspruch 7, wobei der DRX-Planungsprozessor konfiguriert ist, um die Schritte des Bestimmens als Reaktion auf ein Planen von reservierten Unterrahmen durch den Downlink-Planungsprozessor durchzuführen.

10. Einrichtung nach einem der Ansprüche 7 bis 9, wobei der eine oder die mehreren angegebenen Dienste Multimedia Broadcast Multicast Service, MBMS, und/oder evolved MBMS, eMBMS, umfassen.

11. Vorrichtung nach einem der Ansprüche 7 bis 10, wobei die erweiterte DRX-Konfiguration konfiguriert ist, um zu bewirken, dass die UE dauerhaft in dem Wachzustand bleibt, oder wobei die erweiterte DRX-Konfiguration konfiguriert ist, um zu bewirken, dass die UE für mindestens einen vorbestimmten Zeitraum nach den reservierten Unterrahmen in dem Wachzustand bleibt.

12. Einrichtung nach einem der Ansprüche 7 bis 11, die konfiguriert ist, um als eine Basisstation oder ein evolved NodeB, eNodeB, zu arbeiten.

13. Computerprogramm, umfassend Anweisungen, die bei Ausführung auf mindestens einem Prozessor bewirken, dass der mindestens eine Prozessor das Verfahren nach einem der Ansprüche 1 bis 6 ausführt.

14. Träger, der das Computerprogramm nach Anspruch 13 enthält, wobei der Träger eines von einem elektronischen Signal, einem optischen Signal, einem Funksignal oder einem nichttransitorischen computerlesbaren Speichermedium ist.

## Revendications

1. Procédé dans un réseau de communications, dans lequel des transmissions en liaison descendante vers un équipement utilisateur, UE, sont planifiées avec des sous-trames réservées pour un ou plusieurs services spécifiés, le procédé comprenant :
la détermination (S103) d'une quantité de chevauchement entre des périodes de réveil d'une configuration de réception discontinue, DRX, par défaut pour l'UE et lesdites sous-trames réservées ;
le fait de déterminer (S104) que la quantité de chevauchement dépasse un seuil **caractérisé par**, en réponse à ladite détermination que la quantité de chevauchement dépasse un seuil, l'envoi (S105) d'un signal de configuration à l'UE, le signal de configuration configurant l'UE pour utiliser une configuration DRX étendue ayant des périodes de réveil de plus grande durée que les périodes de réveil de la configuration DRX par défaut.

2. Procédé selon la revendication 1, dans lequel le procédé est mis en œuvre en réponse à la détection d'établissement d'une session impliquant l'UE, dans lequel ladite session est facultativement une session de voix sur IP, VoIP, ou une session de voix sur LTE, VoLTE.

3. Procédé selon la revendication 1, dans lequel le procédé est mis en œuvre en réponse à la planification de sous-trames réservées, et dans lequel l'UE est configuré avec la configuration DRX par défaut avant l'étape de détermination de la quantité de chevauchement.

4. Procédé selon l'une quelconque revendication précédente, dans lequel le ou les services spécifiés comprennent un service de diffusion et multidiffusion multimédia, MBMS, et/ou un MBMS évolué, eMBMS.

5. Procédé selon l'une quelconque revendication précédente, dans lequel ladite configuration DRX étendue est configurée pour amener l'UE à rester dans l'état de réveil de manière permanente, ou dans lequel ladite configuration DRX étendue est configurée pour amener l'UE à rester dans l'état de réveil pendant au moins une période de temps prédéterminée après les sous-trames réservées.

6. Procédé selon l'une quelconque revendication précédente, dans lequel le procédé est mis en œuvre dans une station de base ou un nœud B évolué, eNodeB.

7. Appareil (1) comprenant :
un émetteur-récepteur radio (2) configuré pour communiquer avec un équipement utilisateur, UE ;
un processeur de planification de liaison descendante (3) configuré pour planifier des transmissions en liaison descendante sur l'émetteur-récepteur, incluant la planification de sous-trames réservées pour un ou plusieurs services spécifiés ;
**caractérisé par** un processeur de planification de réception discontinue, DRX (4) configuré pour déterminer une quantité de chevauchement entre des périodes de réveil d'une configuration DRX par défaut pour l'UE et lesdites sous-trames réservées, et déterminer que la quantité de chevauchement dépasse un seuil ;
et par un processeur de configuration DRX (5) configuré pour, en réponse à la détermination que la quantité de chevauchement dépasse un seuil, amener l'émetteur-récepteur à envoyer un signal de configuration à l'UE, le signal de configuration configurant l'UE pour utiliser une configuration DRX étendue ayant des périodes de réveil de plus grande durée que les périodes de réveil de la configuration DRX par défaut.

8. Appareil selon la revendication 7, dans lequel le processeur de planification DRX est configuré pour mettre en œuvre les étapes de détermination en réponse à la détection d'établissement d'une session impliquant l'UE, dans lequel ladite session est facultativement une session de voix sur IP, VoIP, ou une session de voix sur LTE, VoLTE.

9. Appareil selon la revendication 7, dans lequel le processeur de planification DRX est configuré pour mettre en œuvre les étapes de détermination en réponse à la planification de sous-trames réservées par le processeur de planification de liaison descendante.

10. Appareil selon l'une quelconque des revendications 7 à 9, dans lequel le ou les services spécifiés comprennent un service de diffusion et multidiffusion multimédia, MBMS, et/ou un MBMS évolué, eMBMS.

11. Appareil selon l'une quelconque des revendications 7 à 10, dans lequel la configuration DRX étendue est configurée pour amener l'UE à rester dans l'état de réveil de manière permanente, ou dans lequel la configuration DRX étendue est configurée pour amener l'UE à rester dans l'état de réveil pendant au moins une période de temps prédéterminée après les sous-trames réservées.

12. Appareil selon l'une quelconque des revendications 7 à 11, et configuré pour fonctionner en tant que station de base ou nœud B évolué, eNodeB.

13. Programme d'ordinateur, comprenant des instructions qui, lorsqu'elles sont exécutées sur au moins un processeur, amènent l'au moins un processeur à effectuer le procédé selon l'une quelconque des revendications 1 à 6.

14. Porteuse contenant le programme informatique selon la revendication 13, dans lequel la porteuse est l'une parmi un signal électronique, un signal optique, un signal radio ou un support de stockage non transitoire lisible par ordinateur.
